# EUROPEAN PATENT SPECIFICATION

(11) **EP 0 918 178 B1**
(45) Date of publication and mention of the grant of the patent: **06.04.2005**
(21) Application number: 98309558.9
(22) Date of filing: 23.11.1998
(51) Int. Cl.: F16K 27/00

(54) **Fluid flow control valve assembly**
Durchflussregelventil
Soupape de contrôle du débit

(30) Priority: 21.11.1997 GB 9724540
(43) Date of publication of application: 26.05.1999
(73) Proprietor: Carver Technology Limited, Birmingham B2 5RS (GB)
(72) Inventor: Ford, Christopher John Charles, Lichfield WS13 6QW (GB); Bryer, Keith Nigel, Pelsall, Walsall WS3 4EW (GB)
(74) Representative: Hill, Richard

(56) References cited:
- GB-A- 2 163 834
- US-A- 3 547 139
- PATENT ABSTRACTS OF JAPAN vol. 007, no. 199 (M-240), 3 September 1983 (1983-09-03) & JP 58 099502 A (KAWASAKI JUKOGYO KK), 13 June 1983 (1983-06-13)

## Description

This invention concerns fluid flow control valve assemblies, for controlling the flow of fluid under pressure from an inlet to an outlet.

An assembly as defined in the preamble of claim 1 is known from US-A-3 547 139.

For those instances in which the fluid is a fuel e.g. propane or butane, for an appliance, e.g. a caravan space heater or water heater, there are a multiplicity of pertinent regulations which stipulate requirements concerning shut-off time, resistance to overpressures and back pressures, overheating, combustibility etc. and there are an equal number of commercial requirements especially those relating to cost, size mass and controllability.

In order to meet the regulatory requirements, it has hitherto been necessary to engineer and combine together in a compound unit or to install in series two different forms of flow control valve assembly, e.g. an on/off valve and a flow modulating valve such as a needle valve, which valves can be engineered from materials and with sufficient precision to meet these requirements. However, the cost of such compound units and the installed cost of series of valves is considerable as are the sizes and masses. Furthermore, the energy levels for controlling such valves can be high in the context of the available battery power in a caravan and other mobile or free standing applications.

In order to solve the problems of meeting the regulatory requirements and the commercial requirements simultaneously, the present invention provides a fluid flow control valve assembly comprising the features defined in claim 1.

In one preferred embodiment, two further valves of lesser flow rates e.g. of 0.33 and 0.66 of the maximum flow rate, and in another preferred embodiment four further valves of lesser flow rates e.g. of 0.1, 0.2, 0.3 and 0.4 of the maximum flow rate, are provided for selective actuation individually or in selected combination to give incremental modulation of the flow.

The valve actuating magnetic flux may be provided by manually movable permanent magnets mounted so as to be displaceable between valve open positions proximal to the body and valve closed positions spaced from the body.

However, the valve assembly is particularly suitable for electromagnetic control by means of individually energisable coils or solenoids mounted on or in abutment with the body.

The foil lamellae are preferably foils of the hard resiliently flexible material e.g. phosphor bronze or non-magnetic stainless steel. The valve seats are preferably the surfaces of one of the foils, which surround fixed diameter openings in that one of the foils. The movable valve members preferably comprise spring tongues formed from the other one of the foils and valve heads of a compressible rubber or plastics material mounted on the spring tongues or on the armatures carried by the spring tongues.

The spacer lamellae preferably provide partitions which can be cut away to connect a plurality of chambers together. Preferably, at least two of said chambers serve as common manifolds for the further valves. The spacer lamellae are preferably formed from a hard durable material, such as aluminium.

One of said foils preferably provides a filter mesh between one of said chambers, namely an inlet chamber, and another of said chambers, namely a feed chamber for the first valve.

The valve assembly and solenoids may be mounted on a a printed circuit board carrying control circuitry for energisation of the solenoids.

The valves are preferably arranged so that they tend to be held closed by the tongues and/or by the applied pressure of the fluid.

The tongues may be simple elongate blades or leaves, but each armature is preferably carried by a pair of M or W shaped tongues so as to be maintained in a plane parallel to the plane of the foil.

Assemblies according to the present invention confer considerable advantage over prior art arrangements. A particular advantage is the considerable recharged power consumption compared to known arrangements: typically of the order of milliwatts. This makes assemblies according to the invention particularly useful for use in mobile and free standing appliances, where dry batteries may be employed, and other installations where it is undesirable or inconvenient to use a mains power supply.

The invention will be described further, by way of example, with reference to the accompanying diagrammatic drawings, wherein:-
FIGURE 1 shows a perspective view of a fluid flow control valve assembly according to the invention;
FIGURE 2 shows a longitudinal sectional diagram of the valve assembly of FIGURE 1 taken along the line B-B of FIGURE 1;
FIGURE 3 shows a transverse cross-sectional view of the assembly of FIGURE 1 taken along the line A-A of FIGURE 1;
FIGURE 4a to 4i show respectively plan views of the lamellae of the valve assembly of FIGURES 1 and 2;
FIGURE 5 shows a detail of one valve of the assembly of FIGURES 1 to 4 in enlarged view;
FIGURE 6 shows two perspective views of the valve seat of FIGURE 5;
FIGURE 7 shows a detail of a rivet of the assembly of FIGURES 1 to 4 in enlarged view;
FIGURE 8 shows an exploded perspective view from above of a second embodiment of a valve assembly;
FIGURE 9 shows a partially exploded perspective view from underneath of the embodiment illustrated in FIGURE 8; and
FIGURE 10 shows a perspective view of a spring tongue.

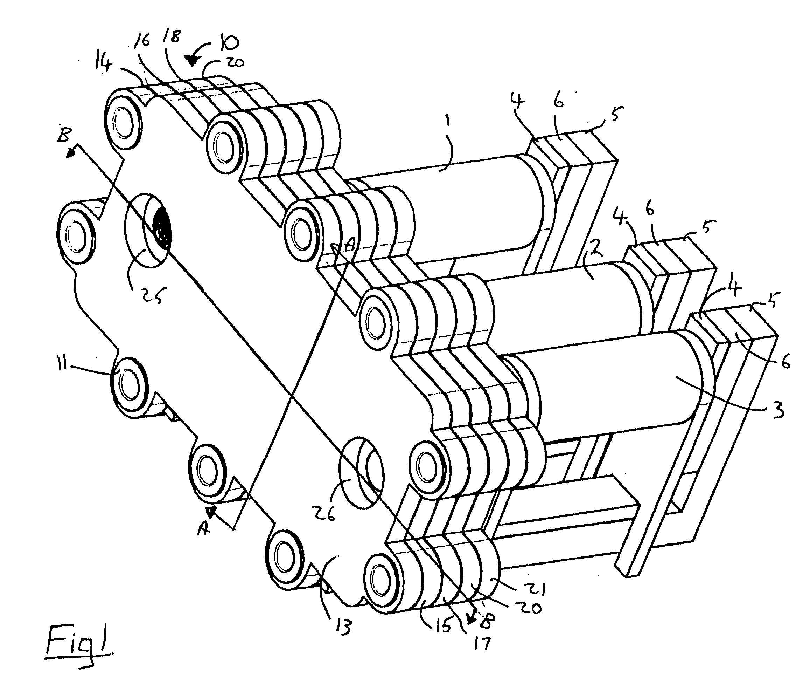

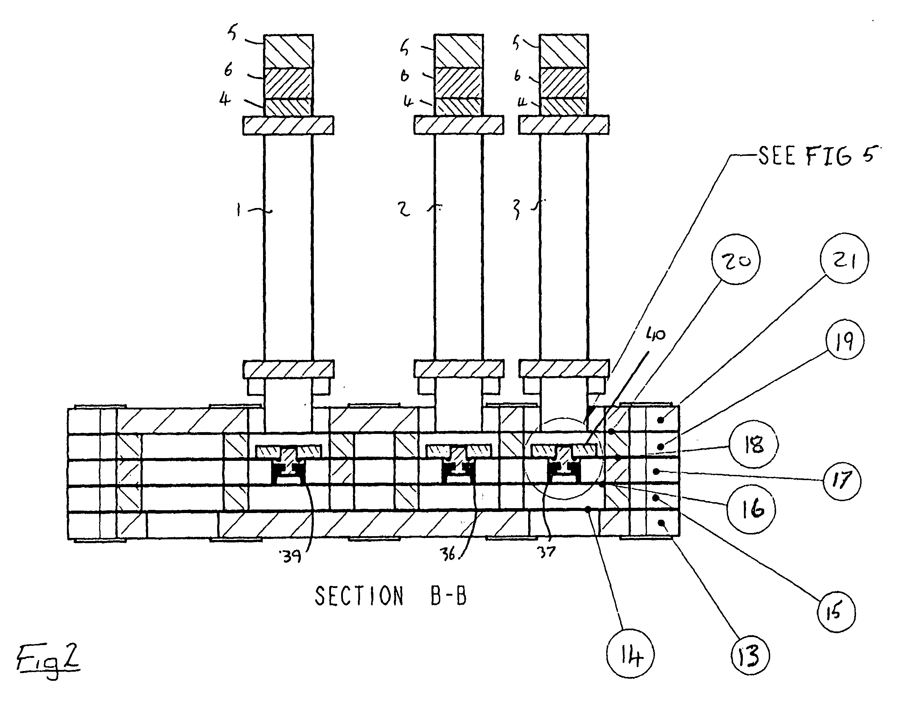

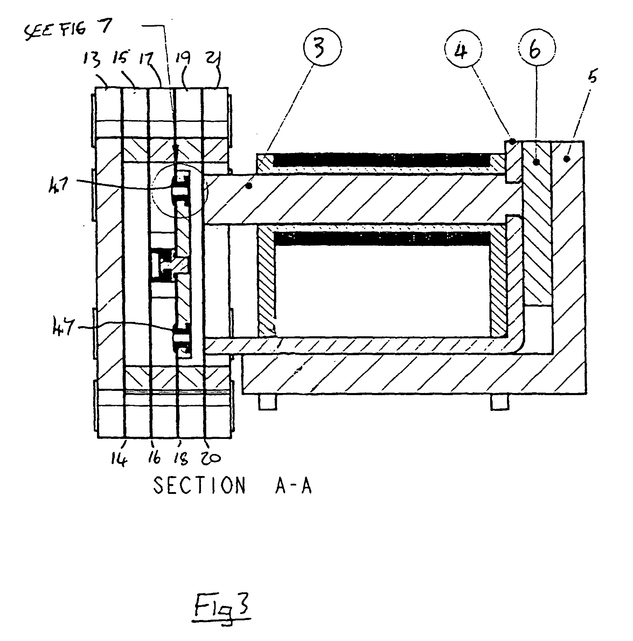

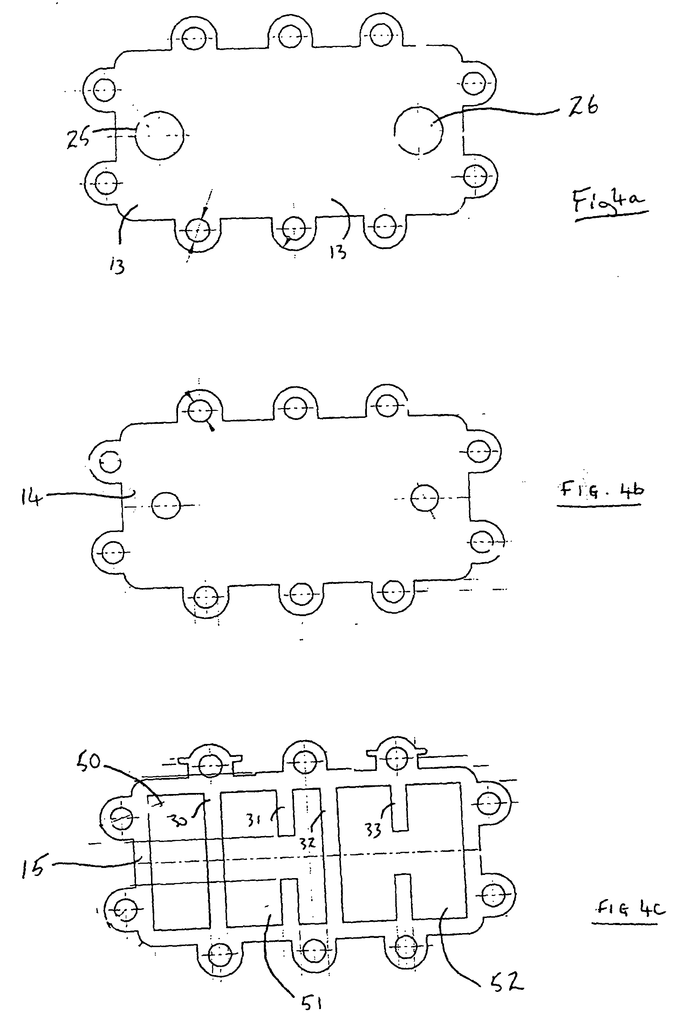

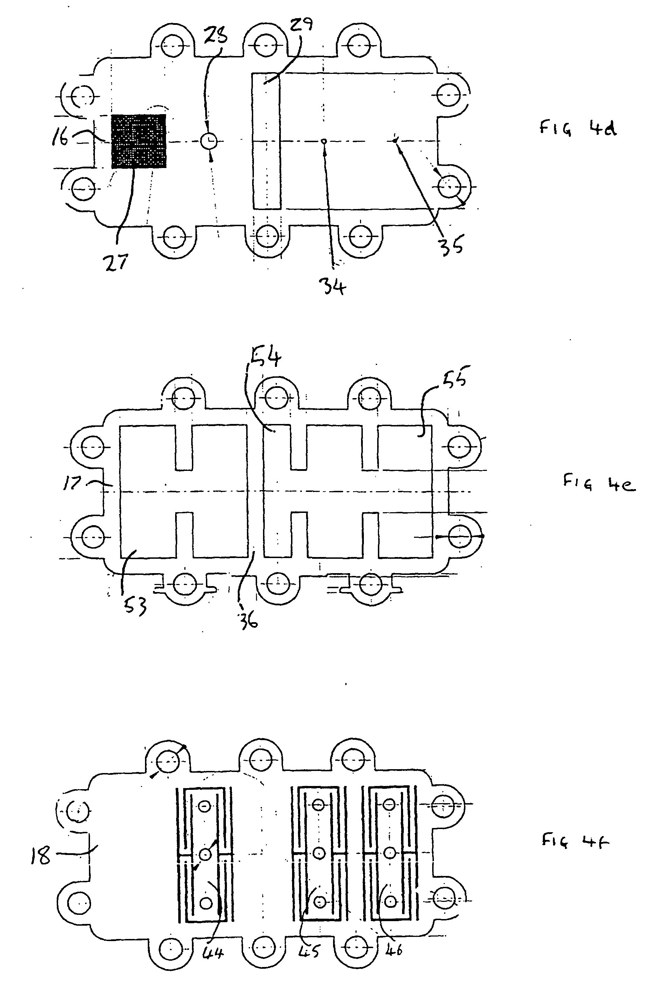

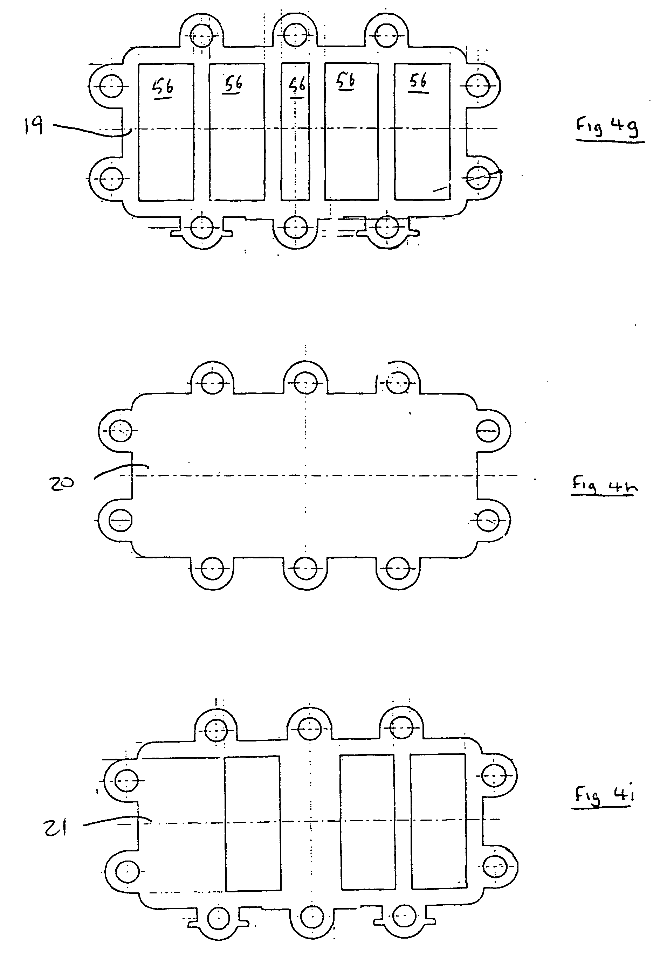

Referring to FIGURES 1 to 7 (in which the same reference numerals are used throughout to identify corresponding components of the assembly), the valve assembly has a body 10 of sandwich construction comprising a plurality of lamellae clamped together by rivets 11, although other fasteners such as threaded fasteners or spring clips could be employed. The interface joints between the lamellae are sealed.

The lamellae include a first valve plate 13, first valve foil (flange plate) 14, a second valve plate (inlet/outlet spacer) 15, a second valve foil (valve port foil) 16, a third valve plate (valve spacer (17), a third valve foil (spring plate 18), a fourth valve plate (feed manifold spacer) 19, a fourth valve foil (backplate) 20 and a final spacer 21.

In association with the lamellae are three solenoids 1, 2 and 3 which extend between the backplate 20 (through the spacer 21) and three coil supports 4, secured to the backplate 21. A further, floating, coil support 5 is also provided, it is spaced from the coil support 4 by way of a layer of foam material 6.

The first valve plate 13 and flange plate 14 include a gas inlet 25 and a gas outlet 26. The inlet/outlet spacer 15 comprises a short e.g. 4 mm slice of a hollow aluminium extrusion providing four internal webs 30, 31, 32 and 33 of which in the spacer 15 only the webs 30 and 32 are left intact.

The valve port foil 16 is formed from a sheet of phosphor bronze e.g. by etching to provide a mesh grid or filter structure 27, an inlet valve opening 28, a transfer port opening 29, and two progressively graduated metering valve openings 34 and 35. The valve spacer 17 is a second slice of the extrusion with a single internal web 36 left intact. The spring plate 18 is formed from the same sheet material and by the same means as the foil 16 so as to provide a series of spring tongues 44, 45 and 46 each of which carries an elastomeric valve member 39, 36, 37 on the side facing the foil 16 and a ferromagnetic armature 40 on the side facing the backplate 20. The valve member 37 is retained by way of an armature stud 38 which passes through the spring plate 18.

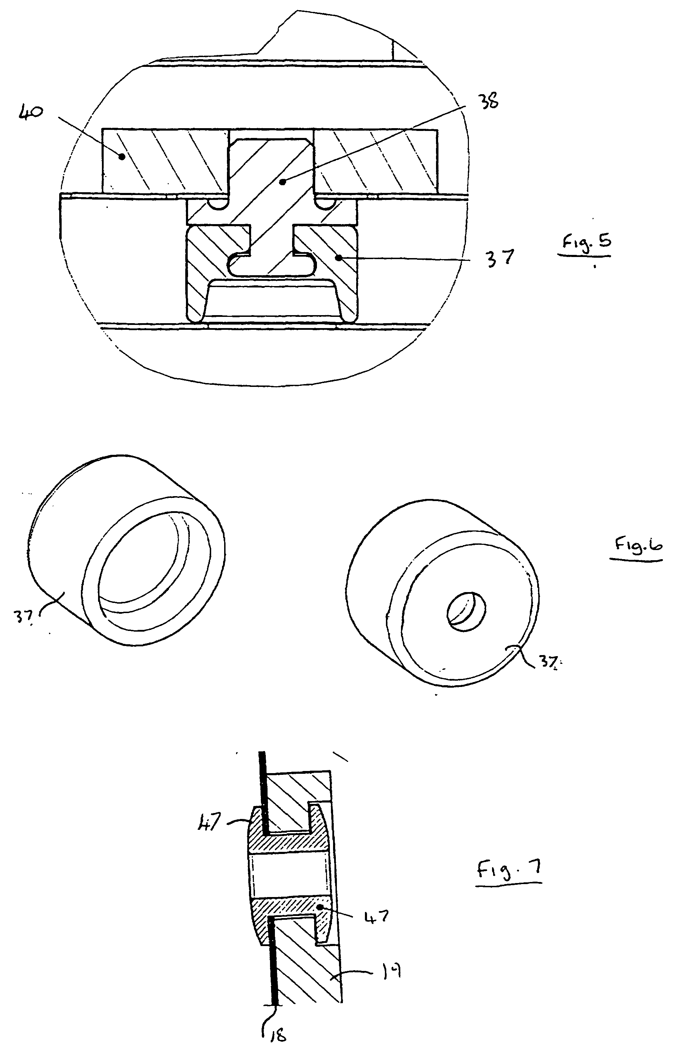

Opposite ends of each spring tongue 44, 45, 46 are secured with rivets 47 to the feed manifold spacer 19. This is shown in detail in FIGURE 7.

The feed manifold spacer 19 is a further slice of the aluminium extrusion with all the webs intact. The backplate 20 is formed from the same sheet material as are the foils 16 and 18. The final spacer 21 is formed from a slice of another aluminium extrusion.

When the lamellae are clamped together to form the body 10, the valve plate 13, flange plate 14, extrusion 15 and foil 16 together define an inlet chamber 50 which extends from the inlet 25 to the filter screen 27, a transfer chamber 51 leading from the inlet valve opening 28 to the transfer port 29, and an outlet flow manifold 52 leading from the valve openings 34 and 35 to the outlet 26. The foils 16 and 18 with the spacer 17 therebetween define an on/off valve chamber 53, in which the valve member 39 is accommodated, an extension 54 of the transfer passage and a common valve chamber 55 which accommodates valve members 36 and 37. The foil 18, spacer 19 and backplate 20 define further chambers 56.

Each valve member 39, 36 and 37 is of greater diameter than its respective valve opening 28, 34 and 35 so that the surrounding portion of the surface of the foil 16 serves as a seat with which the valve member 39 is normally held in sealing abutment by a bias provided by its spring tongue and any pressure in the chamber 53 or 55 which is in excess of the pressure in the passage 51 or manifold 52.

Sealing gaskets or coatings on the confronting surfaces of the lamellae and structural formations to give the necessary rigidity to the lamellae are not shown.

The backplate 20 is preferably of the same material as the foils so as to be of minimum thickness to minimise the distances between the cores of the solenoids 1, 2 and 3 and their respective armatures 40. The backplate 19 also provides a stop to limit movement of the yokes 40 and thus the opening movements of the valve members 39. It will also be appreciated that the spring tongue 44 with its valve member 39 and yoke 40 together with the inlet valve opening 28 form an inlet valve; and that the spring tongues 45 and 46 together with their respective valve members, armatures and valve openings 34 and 35 form a series of two further valves selectively energisable by the solenoids. The openings 34 and 35 are graduated so as to respectively pass 0.33 and 0.66 of the amount of fluid which can pass through the port or opening 28 at the same fluid pressure.

Thus, from the foregoing it will be appreciated that fluid entering the valve assembly 10 through inlet 25 is directed through filter mesh 27 into chamber 53. The flow of the fluid is then interrupted by the on/off valve formed by opening 28 and valve member 39 which is normally kept in sealing contact with opening 28 by action of the spring plate 18.

To allow gas to flow through the assembly solenoid 1, and one of either solenoids 2 or 3, must be energised.

When solenoid 1 is energised armature 40 is drawn towards the solenoid 1, pulling the valve member 39 away from the opening 28. The spring tongue 44 is generally M-shaped and allows the armature 40 to move towards the solenoid 1 with a parallel motion. Fluid can then flow through opening 28 and 29 and into chamber 55. Flow from chamber 55 is via the further valves, formed by openings 34 and 35 and their respective valve members 36 and 37 to chamber 52 and hence to the outlet 26. The rate of flow through the assembly depends upon whether solenoids 2 or 3 or both are energised. Energising one solenoid allows 0.33 of the maximum flow of fluid to pass, energising the other, 0.66 to pass, and energising both, the maximum flow to pass.

An alternative valve assembly having a greater number of valves e.g. one on/off valve and four further valves is preferably arranged so that a progressive variation of the fluid flow can be achieved by selective energisation of the further valves e.g. if four further valves are provided with four valve ports should be graduated to respectively pass 0.1, 0.2, 0.3, 0.4 of the amount of fluid which can pass through the on/off valve port at the same fluid pressure.

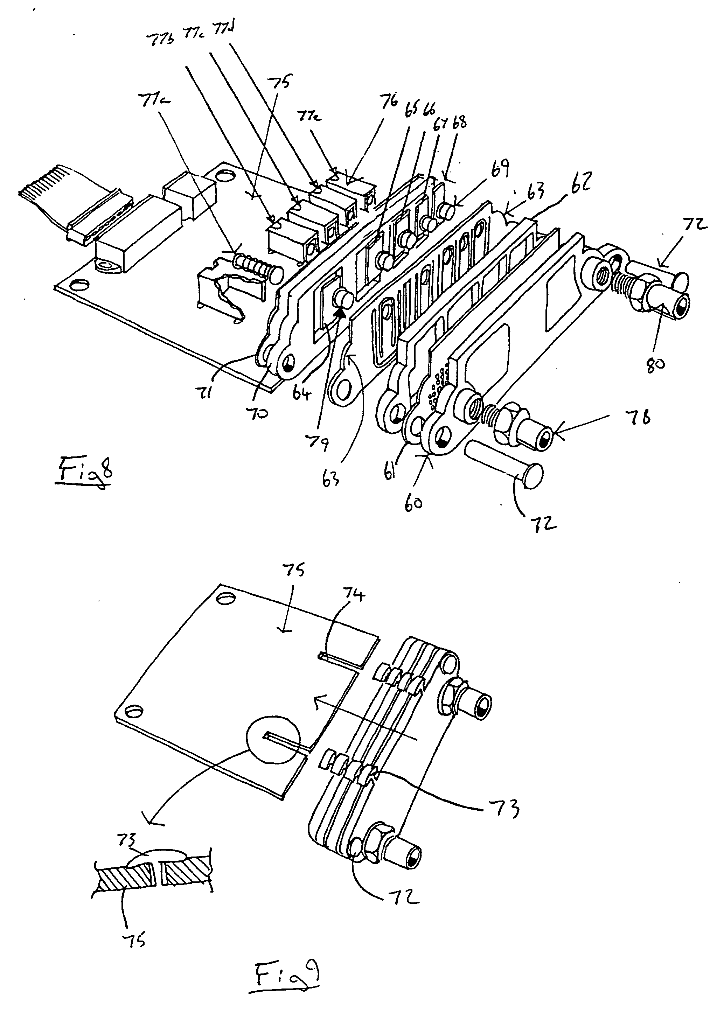

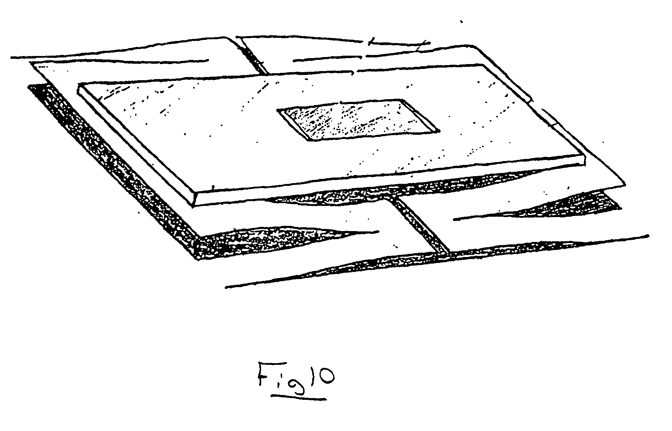

Such an alternative assembly is shown in FIGURES 8 and 9. Referring to FIGURES 8 and 9 the assembly comprises a number of lamellae. Particularly it comprises a flange plate 60, valve port foil 61, valve spacer 62, spring plate 63, five valve members 64 to 68 including rubber tipped sealing pads 69, a feed manifold spacer 70 and a backplate 71.

In use the lamellae are held in sealing contact with each other by rivets 72, as shown in FIGURE 9.

Some of the spacer lamellae include flanged projecting feet 73 to engage in slots 74 to locate the body of the assembly on a printed circuit board 75 which carries mountings 76 for a number of valve energising solenoids 77, identified by suffix letters a to e.

Each solenoid is associated with a valve of the assembly. Solenoid 77a is associated with the on/off valve and solenoids 77b to 77e with the four flow control valves.

The operation of this embodiment is similar to that of the first embodiment illustrated in FIGURES 1 to 7. Fluid is admitted through an inlet 78 in the flange plate, from which it flows through a mesh in the valve port foil 61 to the on/off valve which is closed by rubber tip 79, and held in the closed position by action of the spring plate 63. To allow a flow of gas pass through the assembly the on/off valve is opened by activating solenoid 77a which allows gas to flow to each of the further valves which are graduated to allow passage of 0.1, 0.2, 0.3 and 0.4 of the amount of gas which can pass through the on/off valve. Selective operation of the solenoids therefore allows the amount of gas flowing through the valve to be controlled between 0.1 and the full amount which can pass through the on/off valve, in 0.1 increments.

From the flow control valves gas flows to the outlet 80.

The invention is not confined to details of the foregoing examples and many variations are possible within the scope of the invention. For example the spring tongues could be of simple straight blade form or each armature could be carried at opposite ends by spring tongues of M or W shape which ensure that the armature has a parallel motion when moved by its solenoid.

A perspective view of a spring tongue similar, but not identical, to those of the assemblies illustrated in FIGURES 1 to 9, is shown in FIGURE 10.

Furthermore the valve member 39 need not be as shown but could be a thick planar body, adhered to the spring tongue, as shown in FIGURE 10, instead of being anchored to the armature 40 via a port extending through an aperture.

## Claims

1. A fluid flow control valve assembly comprising a plurality of valves (28, 39; 34, 36; 35, 37) each having a valve seat and a movable valve member (39, 36, 37), in a body (10) provided with an inlet (25) and an outlet (26), the body being of a sandwich construction comprising a plurality of non-ferrous foil lamellae (14, 16, 18, 20) and a plurality of thicker spacer lamellae (13, 15, 17, 19, 21), said valve seats and valve members being formed in or provided on the foil lamellae, chambers (29, 51-55) being bounded by the spacer lamellae and separated by the foil lamellae, and the movable valve members carrying armatures (40) so as to be movable by externally applied magnetic flux, **characterised in that** the plurality of valves comprises a first on/off valve (28, 39) having a maximum flow rate at least equal to the maximum flow required at a predetermined nominal pressure and at least two further valves (34, 36; 35, 37) of lesser flow rates at said predetermined nominal pressure so that a variation of the fluid flow can be achieved by selective energisation of the further valves.

2. A fluid flow control valve assembly according to claim 1, wherein two further valves of 0.33 and 0.66 of the maximum flow rate are provided.

3. A fluid control valve assembly according to any preceding claim further comprising individually energisable solenoids (1, 2, 3) mounted on or in abutment with the body.

4. A fluid flow control valve assembly according to any preceding claim, wherein the foil lamellae comprise foils of phosphor bronze or non-magnetic stainless steel.

5. A fluid flow control valve assembly according to any preceding claim, wherein the valve seats are formed by the surfaces of one (16) of the foils, which surround openings (28, 34, 35) in that one of the foils.

6. A fluid flow control valve assembly according to any preceding claim, wherein the movable valve members comprise spring tongues (44, 45, 46) formed from the other one (18) of the foils and valve heads of a compressible rubber or plastics material mounted on the spring tongues or on the armatures carried by the spring tongues.

7. A fluid flow control valve assembly according to any preceding claim, wherein the spacer lamellae provide partitions which can be cut away to connect a plurality of chambers together.

8. A fluid flow control valve assembly according to any preceding claim, wherein the spacer lamellae are formed from aluminium.

9. A fluid flow control valve assembly according to any proceeding claim, wherein one (16) of said foils provides a filter mesh (27) between one (50) of said chambers and another (53) of said chambers.

10. A fluid flow control valve assembly according to claim 6, wherein the valves are arranged so that they tend to be held closed by the tongues and/or by the applied pressure of the fluid.

11. A fluid flow control valve assembly according to claim 6 or any of claims 7 to 10 when appendant, directly or indirectly, to claim 6 wherein each armature is carried by a pair of M or W shaped tongues.

12. A fluid flow control valve assembly according to claim 6 or any of claims 7 to 11 when appendant, directly or indirectly, to claim 6 wherein the spring tongues are arranged so that the armature has a parallel motion when moved by a magnetic flux.

## Patentansprüche

1. Durchflussregelventil-Anordnung mit mehrere Ventilen (28, 39; 34, 36; 35, 37), von denen jedes einen Ventilsitz und einen bewegbaren Ventilkörper (39, 36, 37) aufweist, wobei die Ventile in einem Gehäuse (10) untergebracht sind, das mit einem Einlass (25) und einem Auslass (26) versehen ist, das Gehäuse eine Sandwich-Konstruktion mit mehreren Nichteisen-Folienlamellen (14, 16, 18, 20) und mehreren dickeren Abstandshalterlamellen (13, 15, 17, 19, 21) ist, die Ventilsitze und Ventilkörper in den Folienlamellen ausgebildet oder an diesen vorgesehen sind, Kammern (29, 51 - 55) durch die Abstandshalterlamellen begrenzt und durch die Folienlamellen getrennt sind und die bewegbaren Ventilkörper Armaturen (40) tragen, so dass sie durch einen von außen aufgebrachten magnetischen induktionsfluss bewegbar sind, **dadurch gekennzeichnet, dass** die mehreren Ventile ein erstes Auf/Zu-Ventil (28, 39) mit einem maximalen Strömungsdurchsatz, welcher dem maximalen, bei einem bestimmten Nenndruck erforderlichen Strom wenigstens entspricht, und wenigstens zwei weitere Ventile (34, 36; 35, 37) aufweisen, welche bei dem bestimmten Nenndruck geringere Strömungsdurchsätze aufweisen, so dass eine Veränderung des Fluiddurchflusses durch wahlweise Stromzufuhr der weiteren Ventile erreicht werden kann.

2. Durchflussregelventil-Anordnung nach Anspruch 1, **dadurch gekennzeichnet, dass** zwei weitere Ventile mit einem Strömungsdurchsatz von 0,33 bzw. 0,66 des maximalen Strömungsdurchsatzes vorgesehen sind.

3. Durchflussregelventil-Anordnung nach einem der vorhergehenden Ansprüche, ferner**gekennzeichnet durch** individuell mit Strom versorgbare Elektromagnete (1; 2, 3), welche an dem Gehäuse oder angrenzend an das Gehäuse angebracht sind.

4. Durchflussregelventil-Anordnung nach einem der vorhergehenden Ansprüche, **dadurch gekennzeichnet, dass** die Folienlamellen Folien aus Phosphorbronze oder nicht magnetischem, nicht rostendem Stahl aufweisen.

5. Durchflussregelventil-Anordnung nach einem der vorhergehenden Ansprüche, **dadurch gekennzeichnet, dass** die Ventilsitze durch die Oberflächen einer (16) der Folien gebildet sind, welche Öffnungen (28, 34, 35) in der betreffenden einen der Folien umgeben.

6. Durchflussregelventil-Anordnung nach einem der vorhergehenden Ansprüche, **dadurch gekennzeichnet, dass** die bewegbaren Ventilkörper Federzungen (44, 45, 46), die von einer anderen (18) der Folien gebildet sind, und Ventilköpfe aus einem zusammendrückbaren Gummi oder Kunststoffmatetial aufweisen, welche an den Federzumgen oder an den durch die Federzungen getragenen Armaturen angebracht sind.

7. Durchflussregelventil-Anordnung nach einem der vorhergehenden Ansprüche, **dadurch gekennzeichnet, dass** die Abstandshalterlamellen Trennwände festlegen, die zum gegenseitigen Verbinden mehrerer Kammern weg geschnitten werden können.

8. Durchflussregelventil-Anordnung nach einem der vorhergehenden Ansprüche, **dadurch gekennzeichnet, dass** die Abstandshalterlamellen aus Aluminium gebildet sind.

9. Durchflussregelventil-Anordnung nach einem der vorhergehenden Ansprüche, **dadurch gekennzeichnet, dass** eine (16) der Folien ein Filtermaschensieb (27) zwischen einer (50) der Kammern und einer anderen (53) der Kammern aufweist

10. Durchflussregelventil-Anordnung nach Anspruch 6, **dadurch gekennzeichnet, dass** die Ventile derart ausgebildet sind, dass sie durch die Zungen mid/oder durch den aufgebrachten Druck des Fluids geschlossen gehalten werden.

11. Durchflussregelventil-Anordnung nach Anspruch 6 oder nach einem der Ansprüche 7 bis 10, sofern diese unmittelbar oder mittelbar auf Anspruch 6 bezogen sind, **dadurch gekennzeichnet, dass** jede Armatur durch ein Paar M- oder W-förmiger Zungen gehalten ist.

12. Durchflussregelventil-Anordnung nach Anspruch 6 oder nach einem der Ansprüche 7 bis 11, sofern letztere unmittelbar oder mittelbar auf Anspruch 6 zurückbezogen sind, **dadurch gekennzeichnet, dass** die Federzungen derart ausgebildet sind, dass die Armatur eine Parallelführung hat, wenn sie durch einen magnetischen Induktionsstrom bewegt wird.

## Revendications

1. Soupape de contrôle du débit comprenant une pluralité de soupapes (28, 39 ; 34, 36 ; 35, 37) possédant chacune un siège de soupape et un élément de soupape mobile (39, 36, 37) dans un corps (10) pourvu d'un orifice d'entrée (25) et d'un orifice de sortie (26), le corps étant une structure sandwich comprenant une pluralité de lamelles de feuilles métalliques non ferreuses (14, 16, 18, 20) et une pluralité de lamelles d'entretoise plus épaisses (13, 15, 17, 19, 21), lesdits sièges de soupape et éléments de soupape étant formés dans ou prévus sur les lamelles de feuilles métalliques, des chambres (29, 51, 55) étant limitées par les lamelles d'entretoise et séparées par les lamelles de feuilles métalliques, et les éléments de soupape mobiles supportant des armatures (40) de manière à être mobiles par l'application externe d'un flux magnétique, **caractérisée en ce que** la pluralité de soupapes comprenne une première soupape (28, 39) ouvert/fermé possédant un débit maximum au moins égal au débit maximum nécessaire à une pression nominale prédéterminée et au moins deux soupapes (34, 36, 35, 37) supplémentaires présentant des débits inférieurs, à ladite pression nominale prédéterminée de telle manière qu'une variation du débit puisse être obtenue par l'alimentation sélective des soupapes supplémentaires.

2. Soupape de contrôle du débit selon la revendication 1, dans laquelle deux soupapes supplémentaires de 0,33 et 0,66 du débit maximum sont fournies.

3. Soupape de contrôle du débit selon l'une quelconque des revendications précédentes comprenant en outre des solénoïdes pouvant être alimentés individuellement (1, 2, 3) montés sur ou en butée avec le corps.

4. Soupape de contrôle du débit selon l'une quelconque des revendications précédentes, dans laquelle les lamelles de feuilles métalliques comprennent des feuilles métalliques de bronze phosphoreux ou d'acier inoxydable non magnétique.

5. Soupape de contrôle du débit selon l'une quelconque des revendications précédentes, dans laquelle les sièges de soupape sont formés par les surfaces de l'une (16) des feuilles métalliques, qui entourent les ouvertures (28, 34, 35) dans cette dernière feuille métallique.

6. Soupape de contrôle du débit selon l'une quelconque des revendications précédentes, dans laquelle les éléments de soupape mobiles comprennent des lames flexibles (44, 45, 46) formées à partir de l'autre (18) des feuilles métalliques et des têtes de soupape d'un matériau compressible de caoutchouc ou de plastique sur les lames flexibles ou sur les armatures portées par les lames flexibles.

7. Soupape de contrôle du débit selon l'une quelconque des revendications précédentes, dans laquelle les lamelles d'entretoise présentent des divisions qui peuvent être retirées pour connecter une pluralité de chambres ensemble.

8. Soupape de contrôle du débit selon l'une quelconque des revendications précédentes, dans laquelle les lamelles d'entretoise sont formées à partir d'aluminium.

9. Soupape de contrôle du débit selon l'une quelconque des revendications précédentes, dans laquelle l'une (16) desdites feuilles métalliques prévoit une grille filtrante (27) entre l'une (50) desdites chambres et l'autre (53) desdites chambres.

10. Soupape de contrôle du débit selon la revendication 6, dans laquelle les soupapes sont disposées de manière à ce qu'elles tendent à être maintenues fermées par les lames et/ou par la pression appliquée par le liquide.

11. Soupape de contrôle du débit selon la revendication 6 ou l'une quelconque des revendications 7 à 10 dans la mesure où elles dépendent, directement ou indirectement, de la revendication 6 dans laquelle chaque armature est portée par une paire de lames en forme de M ou de W.

12. Soupape de contrôle du débit selon la revendication 6 ou l'une quelconque des revendications 7 à 11 dans la mesure où elles dépendent, directement ou indirectement, de la revendication 6 dans laquelle les lames flexibles sont disposées de telle manière que l'armature présente un mouvement parallèle lorsqu'elle est déplacée par un flux magnétique.
